# EUROPEAN PATENT APPLICATION

(11) **EP 4 837 764 A1**
(43) Date of publication of application: **11.11.2026**
(21) Application number: 25175094.9
(22) Date of filing: 08.05.2025
(51) Int. Cl.: B60K 35/22, B60K 35/53, B60K 35/26

(54) **METHOD AND SYSTEM FOR SAFELY MOVING A DISPLAY UNIT IN AN INTERIOR OF A VEHICLE**

(71) Applicant: Bayerische Motoren Werke Aktiengesellschaft, 80809 München (DE)
(72) Inventor: Zaki, Tarek, 80805 München (DE)

(57) **Abstract**

In a first aspect a method for safely moving a display unit (102) in an interior (100) of a vehicle is provided. The method comprises capturing at least one image of at least part of an interior (100) of the vehicle by means of an imaging device (116a, 116b). The method further comprises determining a distance between the display unit (102) and at least one feature of the interior (100) of the vehicle based on the captured image. Moreover, the method comprises generating movement instructions for a movement unit (104) based on the determined distance between the display unit (102) and the at least one feature of the interior (100) of the vehicle. The movement unit (104) may be configured to move the display unit (102). In a further aspect a corresponding system is provided.

## Description

The invention relates to a method for safely moving a display unit in a vehicle interior. The method includes determining a distance between the display unit and features of the vehicle interior. A corresponding system for safely moving a display unit in a vehicle interior is also disclosed.

Vehicles may regularly comprise displays, for example to visualise information relating to the vehicle or other content relevant to passengers of the vehicle. In case the content is only relevant for a selection of the passengers of the vehicle, it may be desirable to move the display into a position such that the selection of passengers may comfortably view the display. Such a movement may be motorised for comfortable actuation of the movement.

Such movement of displays may be a hazard to occupants of the vehicle, in particular in case the display can be moved into positions of potential collision with the occupants. Additionally, the movement of the displays may cause the display to be moved against features of the interior, which may damage the display or the interior.

It is an object to provide a method and a system for safely moving a display unit in a vehicle.

The aforementioned object is achieved by the subject-matter of the independent claims. Advantageous embodiments are defined in the dependent claims and the following description.

In a first aspect a method for safely moving a display unit in an interior of a vehicle is provided. The method comprises capturing at least one image of at least part of an interior of the vehicle by means of an imaging device. The method further comprises determining a distance between the display unit and at least one feature of the interior of the vehicle based on the captured image. Moreover, the method comprises generating movement instructions for a movement unit based on the determined distance between the display unit and the at least one feature of the interior of the vehicle. The movement unit may be configured to move the display unit.

The method enables flexibly moving the display unit in the interior, whilst ensuring the safety of the display unit, in particular when it is moving. This reduces or avoids potential harm to passengers of the vehicle due to display unit. Additionally, this may reduce or avoid potential damage to the display unit due to collision with the features of the vehicle interior.

In particular, the display unit may be moveable in the interior of the vehicle by means of the movement unit. For example, the display unit may be brought into different viewing positions within the vehicle interior. Further, the display unit may be brought into a stowed away position.

In particular, the at least one image is captured of the at least part of an interior and of the display unit. Thus, the capture image may include the display unit and its surrounding at least part of the interior. The capturing of the at least one image may include generating respective imaging data.

The imaging device may be a camera focused on the at least part of the interior. The imaging device may comprise a CCD sensor or a CMOS sensor, for example. When capturing the image, a single image or a stream of images, in particular a video, may be generated.

The at least one feature of the interior of the vehicle may be a physical feature such as an interior trim, interior upholstery or interior furnishing. Alternatively, the feature of the interior of the vehicle may be an occupant of the vehicle interior, in particular a human occupant or an animal such as a pet. In particular, the features of the interior may be an obstacle, when the display unit is moved.

Moreover, the method comprises generating movement instructions for a movement unit based on the determined distance between the display unit and the at least one feature of the interior of the vehicle.

In order to determine the distance between the display unit and the at least one feature of the interior, the capture image, in particular the respective imaging data, may be segmented in order to determine the features of the interior and/or the display unit in the image. For example, based on the segmented image, the position of the features of the interior and/or the display unit may be determined within the image and relative to each other. Based on their relative to each other, their distance may be determined. In particular, several distances may be determined between the display unit and several interior features.

The movement instructions may be provided to the movement unit to direct the movement unit to move the display unit based on the determined distance between the display unit and the at least one feature of the interior of the vehicle.

In particular, the movement unit is configured to (mechanically) move the display unit. For example, the movement unit may move the display unit into different orientations or into different positions in the vehicle. This may include a linear and a rotational movement of the display unit. In particular, the movement unit may move the display unit in several direction at the same time. For example, the movement unit may move the display unit linearly and rotationally at the same time. The movement unit may comprise a motor, such as an electric motor, to move the display unit. Thus, the movement may be a motorised movement.

For example, the display unit is moveable along a plurality of directions by means of the movement unit to flexibly position the display unit in the vehicle interior. For example, the movement unit may be configured to move the display unit in a linear movement and/or a rotary movement. In a particular example, the movement unit may be configured to move the display unit in a direction along a longitudinal axis of the vehicle and/or along a lateral axis of the vehicle. The longitudinal axis of the vehicle may be perpendicular to at least one row of seats or a seat bench of the vehicle, in particular the longitudinal axis may be arranged between a front and a rear of the vehicle. The lateral axis of the vehicle may be parallel to the at least one row of seats of the vehicle, in particular the lateral axis may be arranged between a left and a right side of the vehicle. Thus, in a specific example, the display unit may be movable from a viewing position for a left back seat to a viewing position for a right back seat and/or from a front seat viewing position to a back seat viewing position.

The method may be carried out continuously or periodically, in particular whilst the display unit is being moved by means of the movement unit. Thus, whilst the display unit is being moved, the distance between the display unit and features of the interior may be continuously or periodically determined, in particular to features that the display unit is being moved towards. This enables keeping a safe distance towards these features.

In an embodiment, the generated movement instructions are configured to direct the movement unit to stop movement of the display unit, when the determined distance is below a threshold. This enables keeping a safe distance to features of the interior. In particular, the generated movement instructions are configured to direct the movement unit to stop movement, when the determined distance falls below the threshold, whilst the display unit is being moved.

In an embodiment, the generated movement instructions are configured to direct the movement unit to stop movement of the display unit in a direction corresponding to a direction in or along which the distance was measured, in particular, in a direction towards the at least one feature. This enables a targeted stop of the movement of the display unit, in particular a reverse movement away from the feature is not stopped.

In an embodiment, a warning is issued, when the determined distance is below a threshold. This enables occupants of the vehicle to avoid or remove an obstacle when the display unit is moved. Additionally, the warning may be issued, when the movement instructions where generated to stop the movement of the display unit. The warning may be auditory, visual, and/or haptic. For example, the warning may be displayed by means of the display unit. In particular, the method may include determining a display nearest to the position of the display unit and/or the feature, to which the distance is below the threshold. The warning may be preferably displayed at least on that nearest display. In particular, the warning may be displayed on a display that is viewable from the feature, to which the distance is below the threshold. For example, in case the feature is a front seat being moved, the warning may be displayed on a display that is viewable by a passenger of the interior who is seated in that front seat.

In an embodiment, the warning comprises a characterisation, in particular an identity, of the at least one feature to which the distance was determined. This enables occupants of the vehicle to remove an obstacle to the movement of the display unit in a targeted manner.

In an embodiment, the warning comprises an instruction to clear the at least one feature to which the determined distance is below a threshold. This enables occupants of the vehicle to remove an obstacle to the movement of the display unit in a targeted manner. In particular, the instruction may include to move the at least one feature to increase the distance to the display unit. For example, the feature may be a seat of the vehicle interior, which can be moved in a different position to enable increasing its distance to the display unit.

In an embodiment, several images are captured, in particular by means of several imaging devices. This enables reliably determining the distance to the at least one feature.

In an embodiment, the several images are captured from different positions or angles. This enables reliably determining the distance to the at least one feature. For example, the imaging device may be arranged in a rearview mirror of the vehicle interior. In an alternative, the imaging device or an additional imaging device may be arranged in the display unit.

In particular, when several images are captured, more than one image may be used to determine the distance between the display unit and the at least one feature of the interior. Thus, the determined distance between the display unit and a particular feature of the interior may be based on more than one image.

In another aspect, a system for safely moving a display unit in an interior of a vehicle is provided. The system comprises means configured to carry out the method for safely moving a display unit as described herein.

In particular, the system may comprise a control unit configured to direct the means of the system to carry out the method. Such a control unit may comprise an integrated circuit, such as a field programmable gate array, for example.

In an embodiment the system comprises an imaging device configured to capture an image of at least part of the interior of the vehicle. The system may further comprise the display unit and/or the movement unit configured to move the display unit based on the determined distance.

The system has the same advantages as the method for safely moving a display unit in an interior of a vehicle. Further, the system may be supplemented with the features of the method described in this document, in particular, the features of the dependent claims of the method.

Hereinafter, specific embodiments are described referring to the drawings, wherein:
- Figure 1: is a perspective view of a vehicle interior with an imaging device, a display unit and a movement unit, and
- Figure 2: is a flow diagram of a method for safely moving the display unit in an interior of a vehicle.

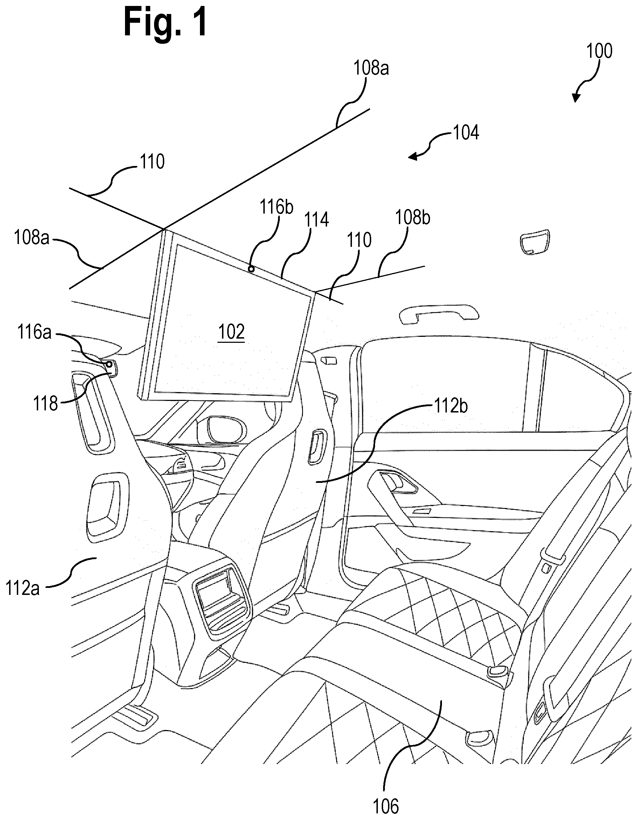

Figure 1 is a perspective view of a vehicle interior 100 with a display unit 102, a movement unit 104 and an imaging device 116a, 116b. The vehicle interior 100 shown in Fig. 1 is of a passenger car. Alternatively, the vehicle may be a heavy goods vehicle or a bus.

The display unit 102 is suspended from a ceiling of the vehicle interior 100. Thus, the display unit 102 is generally arranged in the greenhouse of the vehicle interior 100. In particular, in Fig. 1 the display unit 102 is in a neutral position, in which an electronic display of the display unit 102 is facing a rear seat bench 106. By means of the electronic display, the display unit 102 may present visual content to passengers of the vehicle. In this neutral position of the display unit 102, passengers on the rear seat bench 106 may view this visual content.

The movement unit 104 may comprise several rails 108a, 108b, 110, to which the display unit 102 may be attached and along which the display unit 102 may be moved. For example, the rails 108a, 108b may be arranged in parallel to a longitudinal axis of the vehicle and run from a front to a rear of the vehicle interior 100. The rail 110 may be arranged in parallel to a lateral axis of the vehicle and run from a left to a right side of the vehicle interior 100.

The movement unit 104 may, in particular, be configured to linearly move the display unit 102 along the rails 108a, 108b, 110. For example, the display unit 102 may be moved from the neutral position along the rails 108a, 108b towards the front of the vehicle interior 100. Thus, the display unit 102 may be moved between a set of front seats 112a, 112b from the neutral position into a direction towards the front of the interior 100 and into a corresponding front position. In this front position, passengers seated on the front seats 112a, 112b may view visual content presented by the display unit 102. Thus, the display unit 102 is preferably less wide than the interior 100 in its lateral dimension.

Further, the display unit 102 may be moved along the rail 110 to the left side and the right side of the interior 100 by means of the movement unit 104. In particular, the display unit 102 may be moved from the neutral position into a left position and a right position along the rail 110. In the left position, the display unit 102 is arranged to be preferably viewed from a left rear seat of the rear seat bench 106. In the right position, the display unit 102 is arranged to be preferably viewed from a right rear seat of the rear seat bench 106.

Thus, by means of the movement unit 104, the display unit 102 can be moved into various positions within the interior 100, each position may correspond to a preferred viewing position for one or some of the seats 106, 112a, 112b of the vehicle interior 100. In particular, the movement unit 104 may be configured to move the display unit 102 at least along two perpendicular directions. Thus, by means of the movement unit 104 the display unit 102 can be flexibly positioned in the interior 100.

In addition, the movement unit 104 may be configured to rotate the display unit 102, for example, to align the display unit 102 with the ceiling of the interior 100, for example, for stowing the display unit 102. In particular, the display unit 102 may be attached to the movement unit 104 at or along an upper edge 114 of the display unit 102.

In particular, the movement unit 104 may comprise at least one electric drive configured to move the display unit 102 along the rails 108a, 108b, 110. Further the at least one electric drive may be configured to rotate the display unit 102.

The seats 106, 112a, 112b may be features of the interior 100, for example. Additional examples of features may be occupants of the interior 100, in particular when seated on the seats 106, 112a, 112b.

There is at least one imaging device 116a, 116b configured to capture images of at least part of the interior 100 of the vehicle. The imaging device 116a, 116b may comprise a CCD or a CMOS sensor, for example. The imaging device 116a, 116b may be configured to capture still images or videos of the interior 100.

In particular, the imaging device 116a may be arranged in a rearview mirror 118 of the interior 100. In addition or alternatively, the imaging device 116b may be arranged in the display unit 102. Providing more than one imaging device 116a, 116b enables capturing images of the interior 100 from several angles or positions. Preferably, this enables capturing images of the entire interior 100.

In particular, the imaging device 116a, 116b are positioned to capture images of the display unit 102 in all of its possible positions in the interior 100. Thus, when the display unit 102 is being moved through the interior 100 by means of the movement unit 104, images of the display unit 102 may be captured by means of the imaging device 116a, 116b.

Based on the captured images of the display unit 102 in the interior 100, distances between the display unit 102 and features of the interior 100 may be determined, in particular estimated. For example, when moving the display unit 102 from the neutral position towards the front of the interior 100, a distance between the display unit 102 and an occupant seated in one of the front seats 112a, 112b may be determined based on images captured by means of the imaging device 116a. For example, in case the occupant leans towards a centre of the interior 100 compared to an uprightly seated occupant, the distance between the occupant and the display unit 102 may be determined to be below a threshold.

In case the imaging device 116b is arranged in the display unit 102, the captured images may not include the display unit 102. In this case, the distance to features of the interior 100 may be determined based on an estimated distance from the imaging device 116b. For example, when the display unit 102 is in the neutral position, an occupant may be seated in the central position on the rear seat bench 106. In particular when the occupant may be leaning towards the display unit 102, it may be determined that the distance between the occupant and the display unit 102 is below a threshold.

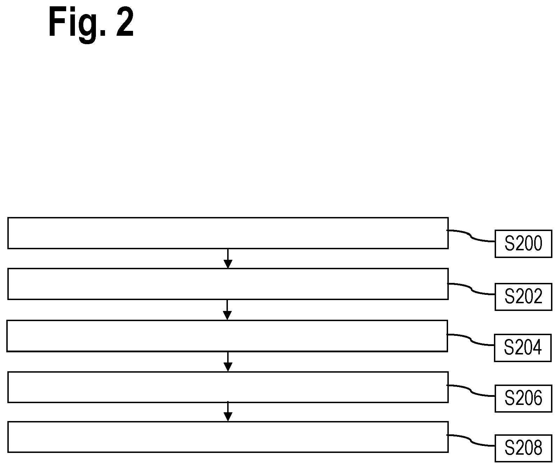

Figure 2 is a flow diagram of a method for safely moving the display unit 102 in the interior 100 of the vehicle. The method starts in step S200. In step S202 at least one image is captured of at least part of the interior 100 of the vehicle by means of at least one of the imaging devices 116a, 116 of the interior 100. The captured images may be a still image or a stream of images. The step S202 may be carried out continuously or periodically, in particular when the display unit 102 is being moved by means of the movement unit 104.

In step S204 the captured images may be used to determine a distance between the display unit 102 and features of the interior 100 of the vehicle. For example, imaging data generated when capturing the images in in step S202 may be analysed to determine the distance between the display unit 102 and the features. In particular, the imaging data may be segmented to determine the display unit 102 and the features in the imaging data. Based on the segmented imaging data, the distance between display unit 102 and the features may be determined.

In step S206 the movement unit 104 is directed based on the determined distance. In particular, movement instructions for the movement unit 104 are generated. In particular, the moving the display unit 102 by means of the movement unit 104 may be stopped in case the distance between the display unit 102 and a particular feature of the interior 100 is below a threshold. To that end, movement instructions may be generated that direct the movement unit 104 to stop moving the display unit 102 and the movement instructions may be transmitted to the movement unit 104.

Optionally, a warning may be issued in step S206, in case the determined distance is below the threshold. This warning may be displayed or otherwise communicated to occupants of the interior 100 of the vehicle. For example, the warning may be issued on the display of the display unit 102.

The warning may include a reason for stopping movement of the display unit 102, for example that an occupant was detected to be at a distance to the display unit 102, which is below a threshold. Additionally, the warning may include instructions to increase the distance in order to be able to continue moving the display unit 102.

The method ends in step S208.

In a specific example, one of the front seats 112a, 112b is being moved towards the rear seat bench 106 when the display unit 102 is in the left or right position along rail 110 behind the respective seat 112a, 112b that is being moved. Images of the seat 112a, 112b and the display unit 102 may be captured and the distance between the seat 112a, 112b and the display unit 102 determined.

In case the distance between the display unit 102 and the seat 112a, 112b falls below a threshold, movement instructions may be issued to the movement unit 104 to move the display unit 102 away from the seat 112a, 112b. For example, the display unit 102 may be moved into a stowed position.

Additionally, a warning may be issued, in particular to an occupant of the seat 112a, 112b being moved, to alert the occupant of a potential collision with the display unit 102.

Alternatively or additionally, the movement of the seat 112a, 112b may be stopped to avoid a collision with the display unit 102. Thus, in a particular embodiment, the movement instructions generated in steps S206 may be configured to direct an additional movement unit, for example of the respective motorised seat 112a, 112b. In this case, the additional movement unit may be configured to move the seat 112a, 112b and the movement instructions may be configured to direct the additional movement unit to stop moving the seat 112a, 112b.

Thus, as shown in the specific example above, the method may also be carried out to monitor the movement of features of the interior 100 towards the display unit 102 and to direct the display unit 102 and/or features of the interior 100 to move based on the distance between the display unit 102 and the features of the interior 100.

The method is applicable to any movement of the display unit 102. In particular, the method can be used to safely move the display unit 102 along the rails 108a, 108b, 110. This may comprise a linear movement of the display unit 102, for example. Alternatively or additionally, the method may be used to safely move the display unit 102 into or out of a stowed position along the ceiling of the interior 100. This may comprise a rotational movement of the display unit 102, for example. In the latter case, the method enables avoiding to clamp hands of passengers of the interior 100 or avoiding a collision with passengers while rotating downwards, in particular.

The method steps S202 to S206 may be repeated. For example, in case the movement of the display unit 102 has been stopped in step S206 based on a distance determined to be below a threshold, the steps S202 and S204 may be repeated. Thus, in case the feature has been moved in or removed from the interior 100, the distance might no longer fall below the threshold and movement of the display unit 102 may be continued.

In particular, the imaging device 116a, 116b and the movement unit 104 may be part of a system configured to carry out the method for safely moving the display unit 102. Additionally, the system may comprise a control unit, for example, to carry out the steps of the method. In particular, the control unit may be configured to determine the distance between the display unit 102 and features of the interior 100 based on the captured images, and to generated movement instructions based on the determined distance.

### List of Reference Signs:

- 100: Vehicle interior
- 102: Display unit
- 104: Movement unit
- 106: Rear seat bench
- 108a, 108b: Rails of movement unit along longitudinal axis
- 110: Rails of movement unit along lateral axis
- 112a: Left front seat
- 112b: Right front seat
- 114: Upper edge of display unit
- 116a, 116b: Imaging device
- 118: Rearview mirror

## Claims

1. A method for safely moving a display unit (102) in an interior (100) of a vehicle, comprising:
capturing at least one image of at least part of an interior (100) of the vehicle by means of an imaging device (116a, 116b),
determining a distance between the display unit (102) and at least one feature of the interior (100) of the vehicle based on the captured image, and
generating movement instructions for a movement unit (104) based on the determined distance between the display unit (102) and the at least one feature of the interior (100) of the vehicle, in particular the movement unit (104) is configured to move the display unit (102).

2. The method according to claim 1, wherein the generated movement instructions are configured to direct the movement unit (104) to stop movement of the display unit (102), when the determined distance is below a threshold.

3. The method according to claim 2, wherein the generated movement instructions are configured to direct the movement unit (104) to stop movement of the display unit (102) in a direction corresponding to a direction in which the distance was measured.

4. The method according to one of the preceding claims, wherein a warning is issued, when the determined distance is below a threshold.

5. The method according to claim 4, wherein the warning comprises a characterisation of the at least one feature to which the distance was determined.

6. The method according to one of the preceding claims 4 and 5, wherein the warning comprises an instruction to clear the at least one feature to which the determined distance is below a threshold.

7. The method according to one of the preceding claims, wherein several images are captured, in particular by means of several imaging devices (116a, 116b).

8. The method according to claim 7, wherein the several images are captured from different positions.

9. A system for safely moving a display unit (102) in an interior (100) of a vehicle, the system comprising means configured to carry out the method according to one of the preceding claims 1 to 8.

10. The system according to claim 9, comprising an imaging device (116a, 116b) configured to capture an image of at least part of the interior (100) of the vehicle.
